Europäisches Patentamt

European Patent Office

Office européen des brevets

(19)

(11) Publication number: **0 049 894**
**B1**

(12)    EUROPEAN  PATENT  SPECIFICATION

(45) Date of publication of patent specification: **12.09.84**

(51) Int. Cl.³: **F 16 F 9/34**

(21) Application number: **81108249.4**

(22) Date of filing: **12.10.81**

(54) **Vortex flow shock absorber with one-way valve.**

(30) Priority: **14.10.80 JPU 145180/80**

(43) Date of publication of application:
**21.04.82 Bulletin 82/16**

(45) Publication of the grant of the patent:
**12.09.84 Bulletin 84/37**

(84) Designated Contracting States:
**DE FR GB**

(56) References cited:
**DE-A-2 604 467**
**DE-A-3 007 410**
**DE-B-1 253 073**
**DE-C- 931 816**
**FR-A-2 466 676**
**GB-A-2 056 613**

(73) Proprietor: **NISSAN MOTOR COMPANY,
LIMITED**
**No.2, Takara-cho, Kanagawa-ku**
**Yokohama-shi Kanagawa-ken 221 (JP)**

(72) Inventor: **Iwata, Kazuroh**
**1136-331, Imaizumi**
**Kamakura-shi Kanagawa-ken (JP)**
Inventor: **Fukushima, Naoto**
**1-7-505, Nishikaigan 3-chome Tsujido**
**Fujisawa-shi Kanagawa-ken (JP)**
Inventor: **Hidaka, Kunihiko**
**47-13, Sugita 8-chome Isogo-ku**
**Yokohama-shi Kanagawa-ken (JP)**

(74) Representative: **Patentanwälte TER MEER -
MÜLLER - STEINMEISTER**
**Triftstrasse 4**
**D-8000 München 22 (DE)**

Courier Press, Leamington Spa, England.

## Description

The present invention relates generally to a hydraulic shock absorber being applicable to a suspension of a vehicle, such as an automotive vehicle. More specifically, the invention relates to a shock absorber having a relief mechanism for relieving excessive hydraulic pressure which will degrade comfort of riding of the vehicle.

Vortex flow shock absorbers have been known in various constructions. Such shock absorbers are useful to apply to the vehicle suspension for compact size in comparison with various other shock absorbers. In the vortex flow shock absorber used as the vehicle suspension member, it has been required to provide a relief mechanism for relieving excessive hydraulic pressure and, in turn, for preventing from producing too great shock absorbing force for comfort riding of the vehicle, which otherwise gives rough ride feeling. To accomplish this requirement, there have been developed various constructions of relief mechanisms applicable to the vortex flow shock absorber.

From the DE—A—3 007 410 a vortex flow shock absorber is known having a piston welded to the lower end of a piston rod, the upper part of a vortex chamber formed in the piston being in communication with one of the working chambers of the shock absorber cylinder via a through hole of the piston and a passage formed in the piston rod in registry with said through hole of the piston. The relief valve is associated with a partition provided in the interior of the vortex chamber and is operative to open and close a passage formed in the partition.

In this prior art, the relief mechanism has a complicate construction and causes difficulties in assembling.

Therefore, it is a principal object of the present invention to provide a vortex flow shock absorber with a relief mechanism of simple construction which does not prevent easy assembling of the shock absorber.

Another and more specific object of the invention is to provide a vortex flow shock absorber which comprises a one-way valve as the relief mechanism provided in the piston rod in order to easily attach the piston on to the piston rod.

To accomplish the above-mentioned and other objects, there is provided a vortex flow shock absorber having a hollow cylinder with a fluid chamber defined therein, a piston reciprocably disposed within said fluid chamber to divide the fluid chamber into first and second chambers, said piston defining therein a vortex chamber which communicates with said first and second chambers via first and second passages so that the fluid introduced through said first passage produces a vortex pattern fluid flow in said vortex chamber, said piston being secured to a piston rod by way of welding, and a pressure relief valve means provided between said vortex chamber and said first chamber for relieving fluid presure in said vortex chamber, characterized in that said pressure relief valve means comprises a relief passage extending in part through said piston rod and connecting said vortex chamber to said first chamber, and a valve member resiliently biased for normally closing one end of said part of the relief passage extending through said piston rod and responsive to a pressure difference between said first and second chambers beyond a set pressure thereof for opening said relief passage for establishing fluid communication between said vortex chamber and said first chamber.

According to the present invention, the piston and piston rod can be attached together by pressure welding. This simplifies the assembling operation of the piston and the piston rod.

The present invention will be more fully understood from the detailed description given herebelow and from the accompanying drawings of preferred embodiments of the present invention, which, however, should not be taken as limitative to the present invention but for elucidation and explanation, only.

In the drawings:

Fig. 1 is a longitudinal section of a preferred embodiment of a vortex flow shock absorber according to the present invention;

Fig. 2 is an enlarged section of a piston of the shock absorber of Fig. 1;

Fig. 3 is a transverse section of the piston taken along line III—III of Fig. 2; and

Fig. 4 is a similar view of Fig. 2 and showing another embodiment of the piston of the shock absorber.

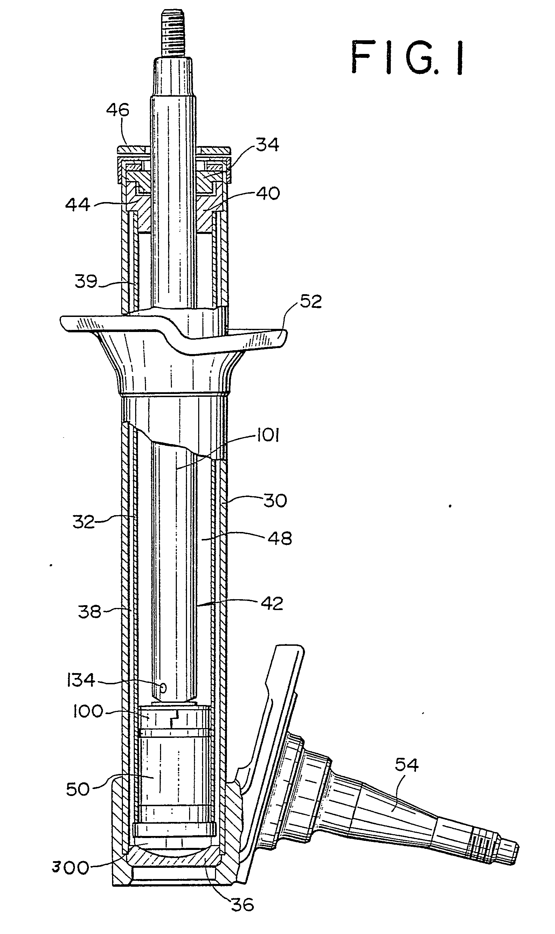

Referring now to Fig. 1, there is illustrated the preferred embodiment of a direct-acting shock absorber according to the present invention. The shock absorber includes outer and inner cylinders 30 and 32 coaxially arranged with respect to each other. The outer cylinder 30 is closed at both upper and lower ends with an elastic sealer 34 and an end fitting 36. The inner cylinder 32 is disposed within the outer cylinder 30 in spaced apart relationship to define therebetween a fluid reservoir chamber 38. A bottom fitting 300 is attached at the lower end of the inner cylinder 32. The upper end of the inner cylinder 32 is closed with an elastic sealer 40 to define a fluid chamber 42 in the inner cylinder, which contains a working fluid. The sealer 40 has a recess 44 on the upper surface, which recess receives a projecting portion downwardly protruding on the lower surface of the sealer 34. Also, the sealer 34 secures a sealing ring 46 between the inner surface of the upper end of the outer cylinder 30.

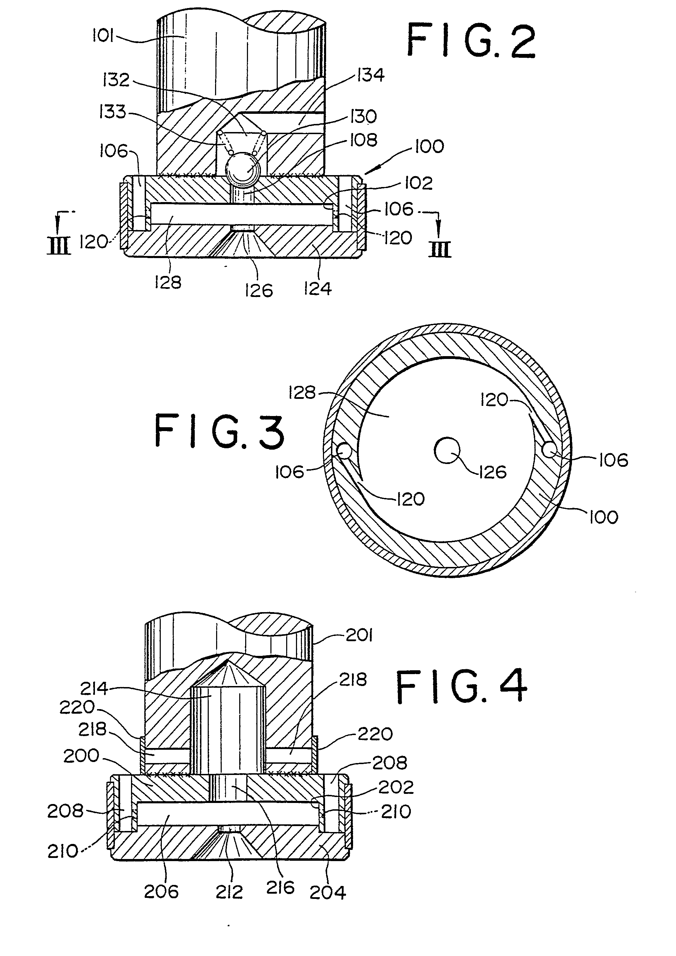

The piston 100 is movably disposed within the fluid chamber 42. The piston 100 is connected to the lower end of a piston rod 101 by pressure welding. The piston 100 divides the fluid chamber 42 into upper and lower fluid chambers 48 and 50. As shown in Figs. 3 to 5, the piston 100 is formed with a circular recess 102.

The piston 100 is formed with vertically extending openings 106 adjacent the circumference thereof. The piston 100 is also formed with a vertically extending opening 108 at the axial center thereof through an upper horizontal section.

The the lower end of the piston, a fitting 124 with a central opening 126 is secured to define a vortex chamber 128 within the recess 102. The vortex chamber 128 communicates with the upper fluid chamber 48 via vortex passages 120 and the through openings 106. In turn, the vortex chamber 128 communicates with the lower fluid chamber 50 via the through opening 126.

The vortex chamber 128 further communicates with the upper fluid chamber 48 via the through opening 108. The upper end of the through opening 108 is closed by a ball-shaped closure 130 which is disposed within a recess 132 formed on the lower end of the piston rod 101. The closure 130 is adapted to be movable within the recess 132 along the piston rod axis and is urged toward the upper end of the through opening 108 with a helical coil spring 133 which is also disposed within the recess 132. The recess 132 communicates with the upper chamber 48 via a lateral passage 134 which extends laterally through the piston rod 101. The closure 130, the coil spring 133 in the recess 132 constitute one-way valve 136 for restricting the fluid flow in the direction from the upper fluid chamber 48 to the vortex chamber.

In the compression stroke, the piston 100 moves downwardly to exand the volume of the upper fluid chamber 48, hereby reducing the fluid pressure therein and to compress the volume of the lower fluid chamber 50, thus increasing the fluid pressure therein. Due to the fluid pressure difference between the upper and lower fluid chambers 48 and 50, a fluid flow is produced in the direction from the lower fluid chamber 50 to the upper fluid chamber 48. The fluid flows into the vortex chamber 128 via the through opening 126 of the fitting 124. The fluid in the vortex chamber 128 flows through the vortex passages 120, and the through openings 106 to the upper fluid chamber 48. At the same time, the closure 130 is forced upwardly against a set pressure of the coil spring 132 to open the upper end of the through openings 108 to allow the fluid in the vortex chamber 128 therethrough.

On the other hand, due to the increase of the fluid pressure, the fluid in the lower fluid chamber 50 flows into the fluid reservoir 34 via the bottom fitting 300. By increasing of the fluid amount in the fluid reservoir chamber 34, a gas filled in the upper section 39 of the fluid reservoir chamber is reduced in volume according to the increase of pressure therein.

In the expansion stroke, the piston 100 moves upwardly to expand the volume of the lower fluid chamber 50, thereby reducing the fluid pressure therein and to reduce the volume of the upper fluid chamber 48, thus increasing the fluid pressure therein. Due to the fluid pressure difference between the upper and lower fluid chambers 48 and 50, a fluid flow is produced in the direction from the upper fluid chamber 48 to the lower fluid chamber 50. The fluid flows into the vortex chamber 128 in vortex fashion via the vortex passages 120 in order to produce absorbing force against the shock. The fluid in the vortex chamber 128 flows through the through opening 126 to the lower fluid chamber 50.

On the other hand, due to reduction of the fluid pressure, the fluid in the fluid reservoir chamber 38 flow into lower chamber 50 via the bottom fitting 300.

During the fluid flow as set forth, the vortex passages 120 and through opening 126 serve as orifices to limit the fluid flow therethrough to produce a resistance against the fluid flow. On the other hand, the vortex in the vortex chamber 128 also produces a resistance against the fluid flowing through the vortex chamber. If the piston stroke is so small or the piston speed is so low that it cannot, by means of the vortex effect, generate a sufficient resistance against the fluid flowing through the vortex chamber 128, the resistance provided by the orifice effect of the vortex passages 120 and the through opening 126 works as main factor of an absorbing force against the shock applied to the shock absorber. When the piston stroke becomes large enough or the piston speed is increased to sufficiently high, the vortex in the vortex chamber 128 provides a sufficient resistance against the fluid flowing through the vortex chamber.

Here, since the fluid pressure in the vortex chamber 128 of the piston 100 is substantially the same as that in the lower fluid chamber, if the fluid pressure in the lower chamber becomes greater than that of the set pressure of the closure 130, the closure 130 is moved upwardly to allow the fluid flowing therethrough. Thus, the closure 130 with coil spring 133, the recess 132, the lateral passage 134 and the openings 108 serve as a relief valve for preventing the shock absorber from producing excessive absorbing force.

The absorbing force produced in the vortex chamber by the vortex is proportional to the diameter of the vortex chamber. According to the shown embodiment the present invention, since the vortex passages are formed on the circumference of the piston, the diameter of the vortex chamber can be of maximum in spite of the presence of the vortex passages. This, in turn, allows the piston being reduced in diameter to permit the shock absorber being reduced in size.

Further, since the piston 100 is attached to the lower end of the piston rod 101 by pressure welding, the assembling of piston-and-rod assembly becomes simple to increase manufacturing efficiency.

In Fig. 1, the reference numerals 52 and 54 respectively represent a spring seat and a steering knuckle. However, the shown embodiment illustrates these elements for the purpose of showing the specific construction of the shock absorber, it should be appreciated that these are not always necessary to be provided to the shock absorber of the present invention.

Fig. 4 shows a modification of the preferred embodiment of the shock absorber of Figs. 1 and 2, in particular, the piston in the shock absorber is otherwise embodied. In the embodiment of Fig. 4, the piston 200 is attached to the lower end of the piston rod 201 by the way of pressure welding similarly to the foregoing embodiment of Figs. 1 and 2. The piston 200 is formed with a circular recess 202 on the lower surface thereof. The recess 202 is closed at the lower end thereof with a fitting 204 in order to define a vortex chamber 206. The vortex chamber 206 communicates with the upper chamber (not shown) defined in the cylinder of shock absorber in the similar manner to the foregoing Figs. 1 and 2, through vertical passages 208 and vortex passages 210. On the other hand, the vortex chamber 206 communicates with the lower chamber (not shown) via a central opening 212 formed in the fitting 204.

At the lower end of the piston rod 201, there is formed an axially extending recess 214. The vortex chamber 206 communicates with the recess 214 via a central through opening 216 formed in a horizontal section of the piston 200. The groove is, in turn, communicated with the upper chamber through lateral passages 218 transversally extended through the piston rod 201 adjacent the lower end thereof. The outer end of the lateral passages are respectively closed with a resilient closure member 220. The resilient closure member 220 is attached to the periphery of the piston rod 201 at the one end thereof and the other end is movable from the periphery of the piston so that the fluid in the vortex chamber 206 can flow therethrough.

Therefore, also in this embodiment, the piston-and-rod assembly can be easily assembled by way of pressure welding to increase efficiency of manufacturing the shock absorber. Further, even though the construction of the piston is simple, this provides enough space for the vortex chamber for effectively working and producing the resistance against the fluid flow by the vortex flow. Furthermore, the one-way valve formed in the lower end of the piston serves for relieving the fluid pressure in the vortex chamber when the pressure in the vortex chamber becomes greater than that of predetermined.

Thus, the present invention fulfills all of the objects and advantages sought thereto.

**Claims**

1. A vortex flow shock absorber having a hollow cylinder (32) with a fluid chamber (42) defined therein, a piston (100, 200) reciprocably disposed within said fluid chamber (42) to divide the fluid chamber (42) into first and second chambers (48, 50), said piston (100, 200) defining therein a vortex chamber (128, 206) which communicates with said first and second chambers (48, 50) via first and second passages (106, 120, 126; 208, 210, 212) so that the fluid introduced through said first passage (106, 120; 208, 210) produces a vortex pattern fluid flow in said vortex chamber (128, 206), said piston being secured to a piston rod (101, 201) by way of welding, and a pressure relief valve means (130, 220) provided between said vortex chamber (128, 206) and said first chamber (48) for relieving fluid pressure in said vortex chamber, characterized in that said pressure relief valve means comprises a relief passage (108, 132, 134; 216, 214, 218) extending in part through said piston rod (101, 201) and connecting said vortex chamber (128, 206) to said first chamber (48), and a valve member (130, 133; 220) resiliently biased for normally closing one end of said part of the relief passage (132, 134; 214, 218) extending through said piston rod and responsive to a pressure difference between said first and second chambers (48, 50) beyond a set pressure thereof for opening said relief passage for establishing fluid communication between said vortex chamber and said first chamber.

2. The shock absorber as set forth in claim 1, characterized in that said pressure relief valve means (130, 220) is adapted to establish and block one-way fluid communication from said vortex chamber (126, 206) to said first chamber (48).

3. The shock absorber as set forth in claim 1 or 2, characterized in that said relief passage includes a recess (132, 214) formed in said piston rod (101, 201), a communication passage (134, 218) transversely extending from said recess (132, 214) of said piston rod with respect to the longitudinal axis of said piston rod for communication between said recess (132, 214) and said first chamber (48), and a through opening (108, 216) communicating said vortex chamber (128, 206) to said groove (132, 214).

4. A shock absorber as set forth in claim 3, characterized in that said valve member comprises a ball shaped valve member (130) and a resilient spring (133) urging said ball shaped valve member (130) on to one end of said through hole (108), said resilient spring (133) defining a set pressure for relieving the fluid pressure in said vortex chamber (128).

5. A shock absorber as set forth in claim 3, characterized in that said valve member comprises a leaf spring (220) having one end attached to the periphery of the piston rod (201) near the outer end of said relief passage (218) so that the other end of the leaf spring can be displaced from said end of the relief passage for establishing communication between said vortex chamber (206) and said first chamber (48) when the fluid pressure in said vortex chamber (206) becomes greater than said set pressure.

## Revendications

1. Amortisseur de choc à écoulement tourbillonnant ayant un cylindre creux (32) avec une chambre de fluide (42) qui y est définie, un piston (100, 200) disposé de manière alternative dans ladite chambre de fluide (42) pour diviser la chambre de fluide (42) en première et seconde chambres (48, 50), ledit piston (100, 200) définissant une chambre de tourbillons (128, 206) qui communique aved lesdites première et seconde chambres (48, 50) par des premier et second passages (106, 120, 126; 208, 210, 212) de façon que le fluide introduit par ledit premier passage (106, 120; 208, 210) produise un écoulement du fluide selon un motif tourbillonnant dans ladite chambre de tourbillons (128, 206), ledit piston étant fixé à une tige de piston (101, 201) par une soudure, et un moyen formant détendeur (130, 220) prévu entre ladite chambre de tourbillons (128, 206) et ladite première chambre (48) pour détendre la pression du fluide dans ladite chambre de tourbillons, caractérisé en ce que ledit moyen formant détendeur comprend un passage de détente (108, 132, 134; 216, 214, 218) qui s'étend partiellement à travers ladite tige de piston (101, 201) et reliant ladite chambre de tourbillons (128, 206) à ladite première chambre (48) et un organe de vanne (130, 133; 220) élastiquement sollicité pour fermer normalement une extrémité de ladite partie du passage de détente (132, 134; 214, 218) traversant ladite tige de piston et répondant à une différence de pression entre lesdites première et seconde chambres (48, 50) au-delà de leur pression établie pour ouvrir ledit passage de détente pour établir la communication de fluide entre ladite chambre de tourbillons et ladite première chambre.

2. Amortisseur de choc selon la revendication 1, caractérisé en ce que le détendeur (130, 220) est adapté à établir et à bloquer une communication à une voie du fluide de la chambre de tourbillons (126, 206) à ladite première chambre (48).

3. Amortisseur de choc selon la revendication 1 ou 2, caractérisé en ce que le passage de détente comprend un évidement (132, 214) formé dans ladite tige de piston (101, 201), un passage de communication (134, 218) s'étendant transversalement dudit évidement (132, 214) de ladite tige de piston par rapport à l'axe longitudinal de ladite tige de piston pour une communication entre ledit évidement (132, 214) et ladite première chambre (48) et une ouverture (108, 216) mettant ladite chambre de tourbillons (128, 206) en communication avec ladite gorge (132, 214).

4. Amortisseur de choc selon la revendication 3, caractérisé en ce que l'organe de vanne comprend un organe de vanne en forme de bille (130) et un ressort élastique (133) sollicitant ledit organe de vanne en forme de bille (130) sur une extrémité dudit trou (108), ledit ressort élastique (133) définissant une pression établie pour détendre la pression du fluide dans ladite chambre de tourbillons (128).

5. Amortisseur de choc selon la revendication 3, caractérisé en ce que ledit organe de vanne comprend un ressort à lame (220) dont une extrémité est attachée au pourtour de la tige de piston (201) à proximité de l'extrémité externe du passage de détente (218) de façon que l'autre extrémité du ressort à lame puisse être déplacée de ladite extrémité du passage de détente pour établir la communication entre ladite chambre de tourbillons (206) et ladite première chambre (48) lorsque la pression du fluide dans ladite chambre de tourbillons (206) devient supérieure à ladite pression établie.

## Patentansprüche

1. Wirbelstrom-Stroßdämpfer mit einem hohlen Zylinder (32), in dem eine Fluidkammer (42) gebildet ist, einem Kolben (100, 200), der hin- und hergehend in der Fluidkammer (42) angeordnet ist und die Fluidkammer (42) in erste und zweite Kammern (48, 50) unterteilt, welcher Kolben (100, 200) im Inneren eine Wirbelkammer (128, 206) bildet, die mit der ersten und zweiten Kammer (48, 50) über erste und zweite Kanäle (106, 120, 126; 208, 210, 212) in Verbindung steht, so daß das durch den ersten Kanal (106, 120; 208, 210) eingeleitete Fluid einen wirbelförmigen Fluidstrom in der Wirbelkammer (128, 206) erzeugt, welcher Kolben an einer Kolbenstange (101, 201) durch Schweißen befestigt ist, und einem Druckentlastungsventil (130, 220) zwischen der Wirbelkammer (128, 206) und der ersten Kammer (48) zum Ablassen von Fluiddruck in der Wirbelkammer, dadurch gekennzeichnet, daß das Druckentlastungsventil einen Entlastungskanal (108, 132, 134; 216, 214, 218) umfaßt, der sich teilweise durch die Kolbenstange (101, 201) erstreckt und die Wirbelkammer (128, 206) mit der ersten Kammer (48) verbindet, und daß das Druckentlastungsventil ein Ventilglied (130, 133; 220) aufweist, das federnd vorgespannt ist und ein Ende desjenigen Abschnitts des Entlastungskanals (132, 134; 214, 218) verschließt, der sich durch die Kolbenstange erstreckt, welches Ventilglied auf eine Druckdifferenz zwischen den ersten und zweiten Kammern (48, 50) jenseits eines vorgegebenen Wertes anspricht und sodann den Entlastungskanal zur Herstellung einer Fluidverbindung zwischen der Wirbelkammer und der ersten Kammer öffnet.

2. Stoßdämpfer nach Anspruch 1, dadurch gekennzeichnet, daß das Druckentlastungsventil (130, 220) derart ausgebildet ist, daß es eine in eine Richtung gehende Fluidverbindung zwischen der Wirbelkammer (126, 202) und der ersten Kammer (48) herstellt bzw. blockiert.

3. Stoßdämpfer nach Anspruch 1 oder 2, dadurch gekennzeichnet, daß der Druckentlastungskanal eine Ausnehmung (132, 214) in der Kolbenstange (101, 201), einen Verbindungskanal (134, 218), der sich quer von der Ausnehmung (132, 214) der Kolbenstange in bezug auf deren Längsachse zur Verbindung der Ausnehmung (132, 214) und der ersten Kammer (48) erstreckt, und eine Durchgangsbohrung (108, 216) zur Verbindung der Wirbelkammer (128, 206) mit der Ausnehmung (132, 214) umfaßt.

4. Stoßdämpfer nach Anspruch 3, dadurch gekennzeichnet, daß das Ventilglied ein kugelförmiges Ventilglied (130) und eine elastische Feder (133) umfaßt, die das kugelförmige Ventilglied (130) gegen ein Ende der Durchgangsbohrung (108) vorspannt, und daß die Feder (133) einen vorgegebenen Druck zum Ablassen des Fluiddrucks in der Wirbelkammer (128) definiert.

5. Stoßdämpfer nach Anspruch 3, dadurch gekennzeichnet, daß das Ventilglied eine Blattfeder (220) umfaßt, die mit einem Ende am Umfang der Kolbenstange (201) in der Nähe des äußeren Endes des Entlastungskanals (218) befestigt ist und mit dem anderen Ende von dem Ende des Entlastungskanals zur Herstellung einer Verbindung zwischen der Wirbelkammer (206) und der ersten Kammer (48) abhebbar ist, wenn der Fluiddruck in der Wirbelkammer (206) größer als der vorgegebene Druck wird.

FIG. 1

0 049 894

FIG.2

FIG.3

FIG.4